# EUROPEAN PATENT SPECIFICATION

(11) **EP 4 506 657 B1**
(45) Date of publication and mention of the grant of the patent: **02.12.2026**
(21) Application number: 23879977.9
(22) Date of filing: 01.09.2023
(51) Int. Cl.: G01B 21/08, G01B 11/06, H01M 10/0585, H01M 4/04, H01M 10/48

(54) **DETECTION DEVICE FOR DETECTING DEFECT OF ELECTRODE AND OPERATION METHOD THEREOF**
DETEKTIONSVORRICHTUNG ZUR DETEKTION EINES DEFEKTS EINER ELEKTRODE UND BETRIEBSVERFAHREN DAFÜR
DISPOSITIF DE DÉTECTION PERMETTANT DE DÉTECTER UN DÉFAUT D'ÉLECTRODE ET SON PROCÉDÉ DE FONCTIONNEMENT

(30) Priority: 18.10.2022 KR 20220134436
(43) Date of publication of application: 12.02.2025
(73) Proprietor: LG Energy Solution, Ltd., Seoul 07335 (KR)
(72) Inventor: SON, Ju Hwan, Daejeon 34122 (KR)
(74) Representative: Goddar, Heinz J.
(86) International application number: PCT/KR2023/011779
(87) International publication number: WO 2024/085394

(56) References cited:
- JP-A- 2015 065 178
- JP-A- 2016 225 119
- JP-A- 2022 103 905
- KR-A- 20190 106 539
- KR-A- 20200 128 917
- KR-A- 20200 128 917

## Description

### [TECHNICAL FIELD]

### CROSS-REFERENCE TO RELATED APPLICATION

This application claims priority to and the benefit of Korean Patent Application No. 10-2022-0134436 filed in the Korean Intellectual Property Office on October 18, 2022.

### TECHNICAL FIELD

Various embodiments disclosed herein relate to a detection device configured to detect a bad electrode and a method of operating the same, and more specifically, to a technology for detecting a bad electrode capable of causing the formation of a gap in a coupling surface with a separator.

### [BACKGROUND ART]

Recently, secondary batteries are being increasingly developed and used due to an advantage that they are rechargeable and have a smaller size and a larger capacity.

Such a secondary battery is manufactured in a form in which an electrode assembly composed of a cathode, a separator, and an anode is accommodated in a battery case together with an electrolyte solution. For example, the electrode assembly may be manufactured by laminating the cathode and the anode in a state in which the separator is interposed therebetween, and then applying a certain level of heat and a pressure. In this case, a portion in which the electrode and the separator face each other may be accommodated in the battery case in a state of being coupled (e.g., bonded) by heat and the pressure. KR 10-2020-0128917A describes a system and method for defect detection in an electrode sheet capable of preventing occurrence of a core crack in an electrode balcony part when manufacturing an electrode sheet.

### [DISCLOSURE]

### [TECHNICAL PROBLEM]

In general, a coupling state between an electrode and a separator in an electrode assembly is related to the performance of a secondary battery. For example, when a portion (e.g., a coupling surface) in which the electrode and the separator face each other has a uniform thickness, it is possible to ensure the performance of the secondary battery at a certain level. Conversely, when at least a portion of the portion in which the electrode and the separator face each other has a non-uniform thickness due to a weakened bonding strength or the like, it is not possible to ensure the performance of the secondary battery at the certain level. For example, in the case of a portion of the coupling surface having a non-uniform thickness, consumption of an electrolyte solution may increase due to a high resistance, thereby causing swelling of a battery cell and causing degradation in the performance of the secondary battery due to lithium precipitation.

At least one of various embodiments of the present invention is directed to providing a detection device configured to detect a bad electrode capable of causing the degradation in the performance of the secondary battery and a method of operating the same.

At least one of various embodiments of the present invention is directed to providing a detection device configured to detect a bad electrode capable of causing the formation of a gap (e.g., a space) in an electrode assembly based on a thickness change of an electrode and a method of operating the same.

### [TECHNICAL SOLUTION]

A detection device configured to detect a bad electrode according to various embodiments includes a measurement module configured to acquire a thickness measurement value of at least one electrode, and a processor electrically connected to the measurement module, wherein the processor is configured to check a groove formed in the at least one electrode based on the thickness measurement value, and detect the at least one electrode as a bad electrode when a wave-shaped groove corresponding to a reference shape is checked.

The processor is configured to check the wave-shaped groove in a form in which a plateau area increased to a certain level or more compared to a reference thickness and a dip area decreased to a certain level or less compared to the reference thickness are consecutively formed based on the reference thickness for the at least one electrode.

The reference shape includes at least one of a specified area and a specified depth.

The processor is configured to check the groove, which is formed in the at least one electrode, in an inclined portion of which a thickness gradually decreases.

According to various examples not forming part of the present invention, the inclined portion may be formed in a cutting or coating process among processes of manufacturing the at least one electrode.

According to various embodiments, the processor may be configured to check the groove in an upper end portion of the electrode in a certain range toward the other end based on an edge of an electrode tab formed on the at least one electrode.

According to various embodiments, the processor may be configured to acquire a thickness measurement value of an electrode assembly in which a cathode and an anode having substantially the same size are laminated with a separator interposed therebetween.

According to various embodiments, the processor may be configured to acquire a thickness measurement value of an electrode assembly in which an anode having a relatively larger size and a cathode having a relatively smaller size are laminated with a separator interposed therebetween.

According to various embodiments, the processor may be configured to check a distance between a position at which the dip area starts after the plateau area and an edge of the cathode when the wave-shaped groove corresponding to the reference shape is checked, detect the at least one electrode as a normal electrode when the distance is included in a specified range, and detect the at least one electrode as a bad electrode when the distance is out of the specified range.

According to various embodiments, the detection device may further include a memory, wherein the processor may be configured to re-set the reference shape based on the shape of the wave-shaped groove formed in the bad electrode, and store the re-set reference shape in the memory.

A method of operating the detection device according to various embodiments, includes an operation of acquiring a thickness measurement value of at least one electrode, an operation of checking a groove formed in the at least one electrode based on the thickness measurement value, and an operation of detecting the at least one electrode as a bad electrode when a wave-shaped groove corresponding to a reference shape is checked.

The wave-shaped groove includes a form in which a plateau area increased to a certain level or more compared to a reference thickness and a dip area decreased to a certain level or less compared to the reference thickness are consecutively formed based on the reference thickness for the at least one electrode.

The reference shape includes at least one of a specified area and a specified depth.

The operating method includes an operation of checking the groove, which is formed in the at least one electrode, in an inclined portion of which a thickness gradually decreases.

According to various examples not forming part of the present invention, the inclined portion may be formed in a cutting or coating process among processes of manufacturing the at least one electrode.

According to various examples not forming part of the present invention, the operating method may include an operation of checking the groove in an upper end portion of the electrode in a certain range toward the other end based on an edge of an electrode tab formed on the at least one electrode.

According to various examples not forming part of the present invention, the operating method may include an operation of acquiring a thickness measurement value of an electrode assembly in which a cathode and an anode having substantially the same size are laminated with a separator interposed therebetween.

According to various examples not forming part of the present invention, the operating method may include an operation of acquiring a thickness measurement value of an electrode assembly in which an anode having a relatively larger size and a cathode having a relatively smaller size are laminated with a separator interposed therebetween.

According to various examples not forming part of the present invention, the operating method may include an operation of checking a distance between a position at which the dip area starts after the plateau area and an edge of the cathode when the wave-shaped groove corresponding to the reference shape is checked, an operation of detecting the at least one electrode as a normal electrode when the distance is included in a specified range, and an operation of detecting the at least one electrode as a bad electrode when the distance is out of the specified range.

According to various examples not forming part of the present invention, the operating method may include an operation of re-setting the reference shape based on the shape of the wave-shaped groove formed in the bad electrode, and an operation of storing the re-set reference shape.

### [ADVANTAGEOUS EFFECTS]

According to the detection device configured to detect the failure of the electrode and the method of operating the same according to various embodiments disclosed herein, by detecting the bad electrode capable of causing the formation of the gap in the electrode assembly based on the thickness change of the electrode, it is possible to manufacture the secondary battery that ensures the performance at the certain level.

The effects that may be obtained herein are not limited to the above-described effects.

### [DESCRIPTION OF DRAWINGS]

FIGS. 1A to 1C are views schematically illustrating a secondary battery according to various embodiments.
FIG. 2 is a view illustrating a configuration of a detection device configured to detect a failure of an electrode according to various embodiments.
FIGS. 3A and 3B are views for describing a bad electrode that causes the formation of a gap in an electrode assembly.
FIGS. 4A to 4D are views for describing an operation of detecting the bad electrode according to various embodiments.
FIG. 5 is a view for describing another operation of detecting the bad electrode according to various embodiments.
FIGS. 6A and 6B are views for describing the performance of the detection device according to various embodiments.
FIG. 7 is a flowchart for describing an operation of the detection device according to various embodiments.
FIG. 8 is a flowchart for describing another operation of the detection device according to various embodiments
FIGS. 9A and 9B are views for describing an operation of setting a quality requirement criterion for an electrode in the detection device according to various embodiments.

### [MODE FOR INVENTION]

Hereinafter, some embodiments of the present invention will be described in detail with reference to exemplary drawings. In adding reference numerals to components in each drawing, it should be noted that the same components have the same reference numerals as much as possible even when they are illustrated in different drawings. In addition, in describing embodiments of the present invention, a detailed description of related known configurations or functions will be omitted when it is determined that the detailed description obscures the understanding of the embodiments of the present invention.

The terms such as first, second, A, B, (a), and (b) may be used to describe components of the embodiments of the present invention. These terms are only for the purpose of distinguishing one component from another, and the nature, sequence, order, or the like of the corresponding component is not limited by the terms. In addition, unless otherwise defined, all terms (including technical and scientific terms) used herein have the same meanings as those commonly understood by those skilled in the art to which the present invention pertains. The terms defined in a generally used dictionary should be construed as having meanings that coincide with the meanings of the terms from the context of the related technology and are not construed as an ideal or excessively formal meaning unless clearly defined in this document.

In addition, various embodiments of this document and the terms used herein are not intended to limit the technical features described herein to specific embodiments and should be understood to include various modifications, equivalents, or substitutes of the corresponding embodiments. In the description of the drawings, like reference numerals may be used for like or related components. A singular form of a noun corresponding to an item may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain component (e.g., a first component) is described as being "coupled" or "connected" to another component (e.g., a second component) with or without the terms "functionally" or "communicatively," this means that the certain component may be connected to another component directly (e.g., by wire or wirelessly) or through a third component.

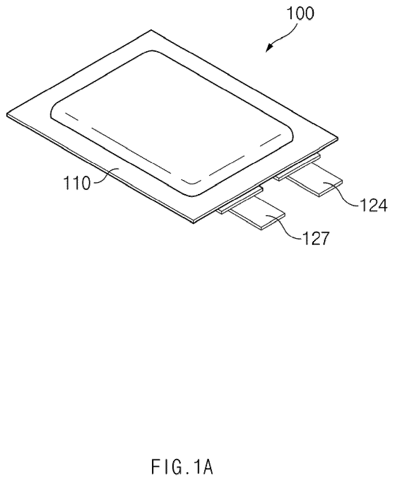

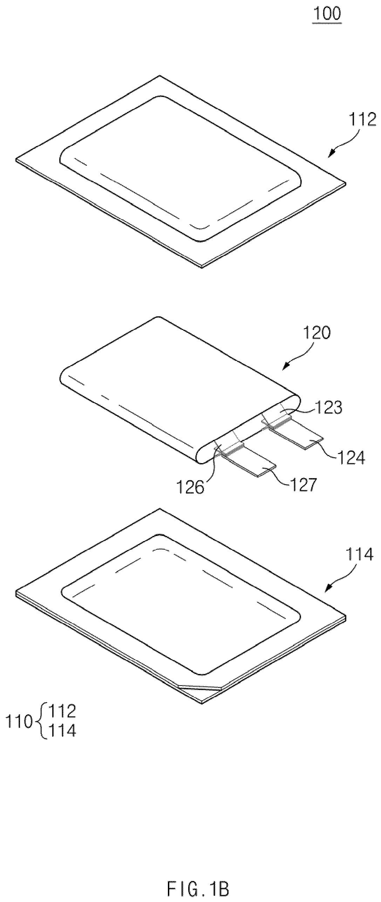

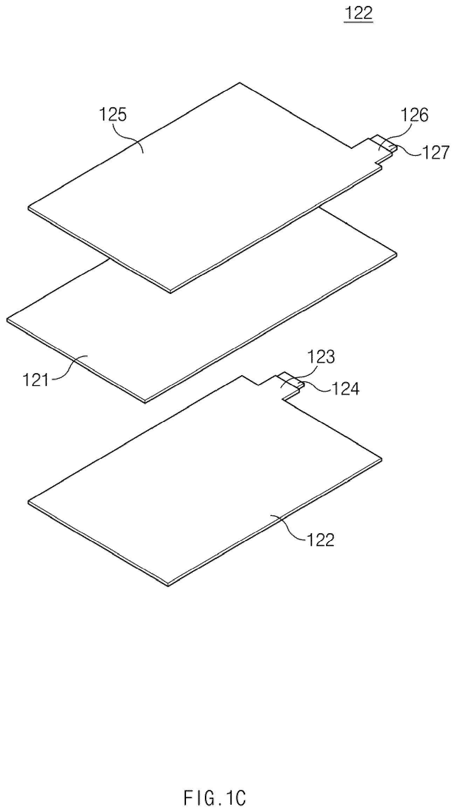

FIGS. 1A to 1C are views schematically illustrating a secondary battery according to various embodiments.

Referring to FIGS. 1A to 1C, a secondary battery 100 according to various embodiments may be configured in a form in which an electrode assembly 120 and an electrolyte solution are accommodated in a battery case 110.

According to various embodiments, the battery case 110 may include a first case 112 (e.g., an upper case) and a second case 114 (e.g., a lower case). The first case 112 may include a space configured to accommodate at least a portion of the electrode assembly 120, and the second case 114 may include a space configured to accommodate the other portion of the electrode assembly 120.

According to one embodiment, the electrode assembly 120 and the electrolyte solution may be accommodated in an inner space formed by coupling the first case 112 to the second case 114, and edges of the first case 112 and the second case 114 may be sealed in a state in which the electrode assembly 120 and the electrolyte solution are accommodated.

According to various embodiments, the electrode assembly 120 may be configured in a form in which a first electrode 122 (e.g., an anode or a negative electrode plate) and a second electrode 125 (e.g., a cathode or a positive electrode plate) are laminated with a separator 121 interposed therebetween.

According to one embodiment, each of the electrodes 122 and 125 may be formed in a structure in which an active material slurry is applied to a current collector. For example, the slurry may be formed by stirring a granular active material, an auxiliary conductor, a binder, a plasticizer, or the like in a state in which a solvent is added.

According to one embodiment, each of the electrodes 122 and 125 may have a non-coated portion to which the slurry is not applied, and an electrode tab 123 or 126 corresponding to each of the electrodes 122 and 125 may be attached to the non-coated portion. In addition, each of the electrode tabs 123 and 126 may be coupled by being attached to one end of an electrode lead 124 or 127, and the other end of the electrode lead 124 or 127 may be exposed to the outside of the battery case 110 and provided as an electrode terminal that may be connected to another secondary battery or an external device such as a load or a charging device.

According to various embodiments, each of the electrodes 122 and 125 and the separator 121 may be maintained as a state of being coupled (e.g., bonded) by heat and a pressure in the electrode assembly 120, and in order to ensure the performance of the secondary battery 100 at a certain level, each of the electrodes 122 and 125 and the separator 121 need to be coupled to form a coupling surface (e.g., a bonding surface) having an uniform thickness. For example, consumption of the electrolyte solution in the electrode assembly 120 may increase in a portion of the coupling surface having a non-uniform thickness, thereby causing swelling of a battery cell and causing degradation in the performance of the secondary battery 100 due to lithium precipitation.

In this regard, according to various embodiments described in detail with reference to the following drawings, at least one of the electrode 122 and 125 that cause a state of the non-uniform thickness when coupled to the separator 121 may be detected. Therefore, since the electrodes 122 and 125 that cause the state of the non-uniform thickness when coupled to the separator 121 may be detected before or after the electrode assembly 120 is manufactured, it is possible to manufacture the secondary battery 100 that ensures performance at a certain level.

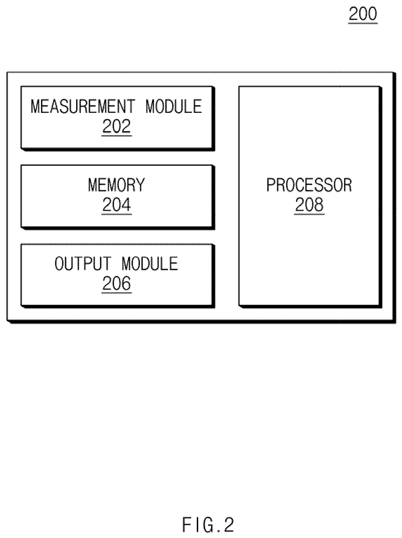

A detection device configured to detect a failure of the electrodes 122 and 125 according to various embodiments will be described in detail with reference to FIGS. 2 to 6 below.

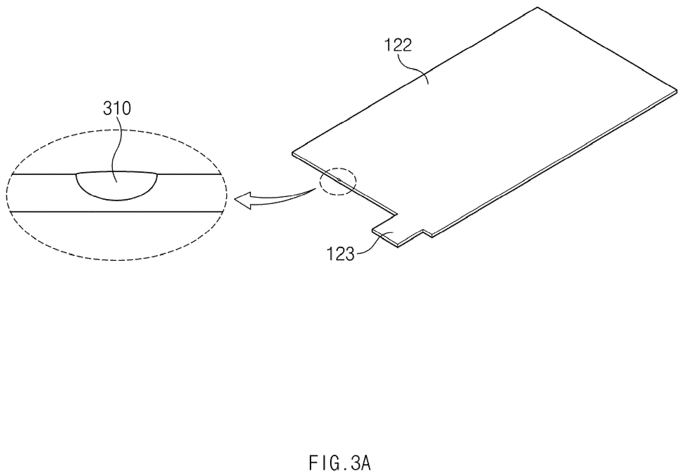

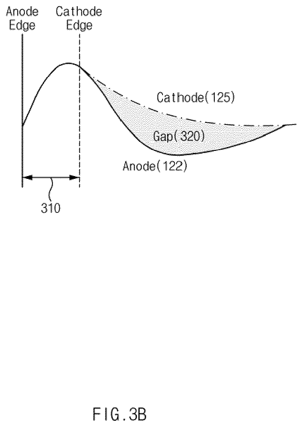

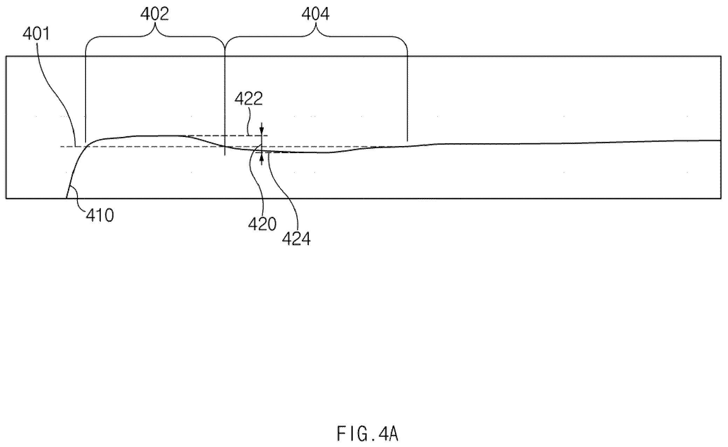

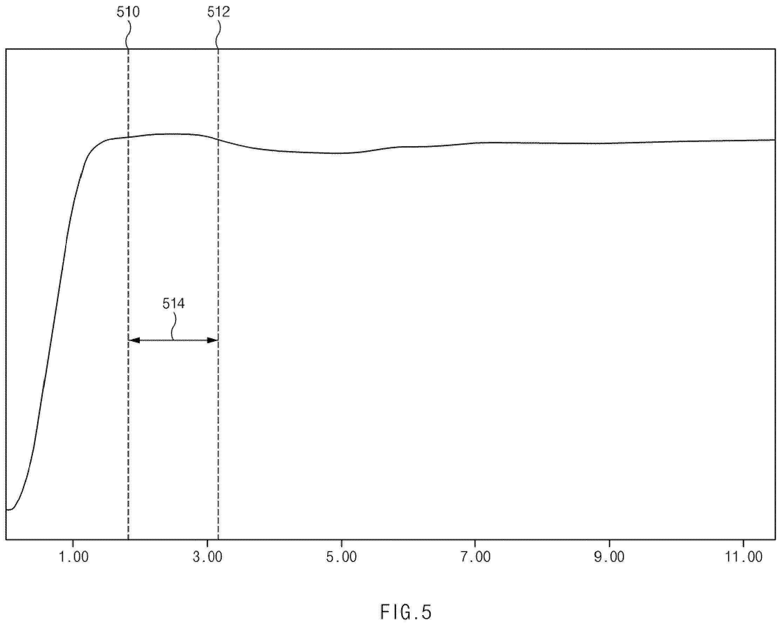

FIG. 2 is a view illustrating a configuration of a detection device configured to detect a failure of an electrode according to various embodiments. In addition, FIGS. 3A and 3B are views for describing a bad electrode that causes the formation of a gap in an electrode assembly, FIGS. 4A to 4D are views for describing an operation of detecting the bad electrode according to various embodiments, and FIG. 5 is a view for describing another operation of detecting the bad electrode according to various embodiments.

Referring to FIG. 2, a detection device 200 according to various embodiments includes a measurement module 202, a memory 204, an output module 206, and a processor 208. However, this is only exemplary, and various embodiments are not limited thereto. For example, at least one of components of the detection device 200 may be omitted, or one or more other components (e.g., an input device or a power management device) may be added as components of the detection device 200. In addition, at least one of the above-described components may be integrated with another component.

According to various embodiments, the measurement module 202 is configured to acquire a thickness measurement value for at least one of the electrodes 122 and 125. According to one embodiment, the measurement module 202 may measure the thickness measurement value for the at least one of the electrodes 122 and 125 coupled to the separator 121. For example, the measurement module 202 may include a light emitter configured to emit light toward the at least one of the electrodes 122 and 125 and a light receiver configured to detect light reflected from the at least one of the electrodes 122 and 125.

According to various embodiments, the memory 204 may include programs, algorithms, routines, and/or commands related to an operation (or control) of the detection device 200.

For example, the memory 204 may include at least one type of storage medium among a memory of a flash memory type, a hard disk type, a micro type, or a card type (e.g., a secure digital (SD) card or an extream digital (XD) card), and a memory of a random access memory (RAM), static RAM (SRAM), read-only memory (ROM), programmable ROM (PROM), electrically erasable PROM (EEPROM), magnetic RAM (MRAM), magnetic disk, or optical disk type, and various embodiments are not limited thereto.

According to various embodiments, the output module 206 may provide information on the operation of the detection device 200. For example, at least a portion of the information output through the output module 206 may include a result of detecting at least one of the electrodes 122 and 125 (e.g., a bad electrode) that causes the non-uniform thickness when coupled to the separator 121.

According to one embodiment, the output module 206 may include a display configured to output visual information. For example, the display may include one or more among a liquid crystal display, a thin film transistor-liquid crystal display, an organic light-emitting diode, a flexible display, a 3-dimensional (3D) display, and a transparent display. In addition, the display 120 may include a touch sensor configured to detect a touch.

However, this is only exemplary, and various embodiments are not limited thereto. For example, at least some of the information on the operation of the detection device 200 may be provided as auditory information. In this case, the output module 206 may further include an audio output device (e.g., a speaker) configured to output an audio signal to the outside of the detection device 200).

According to various embodiments, the processor 208 may control one or more other components (e.g., the measurement module 202, the memory 204, and the output module 206) of the detection device 200 and perform various data processing or calculations.

For example, the processor 208 may detect at least one of the electrodes 122 and 125 that causes the non-uniform thickness when coupled to the separator 121. As described above, when the coupling surface formed by coupling the at least one of the electrodes 122 and 125 to the separator 121 has a non-uniform thickness, it is possible to degrade the performance of the secondary battery 100.

The thickness of the coupling surface may be determined by a shape of the at least one of the electrodes 122 and 125. For example, as illustrated in FIGS. 3A and 3B, when at least one of the electrodes 122 and 125 in which an area ( a groove) 310 relatively dipped compared to the periphery is formed is coupled to the separator 121, this may cause the formation of a gap (e.g., a space) 320 having a certain size in a portion (e.g., a coupling surface) in which the at least one of the electrodes 122 and 125 and the separator 121 face each other. According to one embodiment, as illustrated in FIG. 4A, the groove 310 has a wave-shaped groove including a form in which an area 402 (e.g., a plateau area) increased to a certain level or more compared to a reference thickness 401 (e.g., an average thickness) and an area 404 (e.g., a dip area) decreased to a certain level or less compared to the reference thickness 401 are consecutively formed based on the reference thickness 401 (e.g., the average thickness) of surfaces of the electrodes 122 and 125. The gap 320 formed by the wave-shaped groove 310 is a portion in which at least a portion of the electrode 122 or 125 and at least a portion of the separator 121 are not coupled by a weakened coupling strength (e.g., a bonding strength) around the groove 310 formed in the electrode 122 or 125 and may cause the formation of the coupling surface having the non-uniform thickness.

In this regard, the processor 208 may detect at least one of the electrodes 122 and 125 having the shape in which the groove 310 (e.g., the wave-shaped groove) is formed as a bad electrode that causes the formation of the gap 320 in the electrode assembly 120 when coupled to the separator 120. Therefore, it is possible to prevent the electrode assembly 120 from being manufactured as the bad electrode, and as a result, it is possible to manufacture the secondary battery 100 that ensures the performance at a certain level. The processor 208 according to various embodiments related to this will be described in detail below.

According to various embodiments, the processor 208 may check a thickness change of the at least one of the electrodes 122 and 125 as part of the operation of detecting the bad electrode. For example, the processor 208 may measure the thickness (e.g., the thickness change) of the at least one of the electrodes 122 and 125 based on measurement values acquired through the measurement module 202.

According to various embodiments, the processor 208 may determine whether the groove 310 relatively dipped compared to the periphery has been formed in the at least one of the electrodes 122 and 125 based on the measured thickness. Preferably, the processor 208 may determine whether the wave-shaped groove in which the area 402 (e.g., the plateau area) increased to the certain level or more compared to the reference thickness 401 and the area 404 (e.g., the dip area) decreased to the certain level or less compared to the reference thickness 401 are consecutively formed based on the reference thickness 401 (e.g., the average thickness) of the surfaces of the electrodes 122 and 125 has been formed.

According to one embodiment, the processor 208 may determine that the groove 310 is not formed in the corresponding electrode when the thickness of the at least one of the electrodes 122 and 125 is changed in the same direction (or to the same sign).

According to another embodiment, the processor 208 may determine that at least one groove 310 has been formed in the corresponding electrode when an inflection point at which a direction of the thickness change of the at least one of the electrodes 122 and 125 is changed is present.

According to various embodiments, when it is checked that the groove 310 has been formed in the at least one of the electrodes 122 and 125, the processor 208 may determine whether the checked groove 310 may cause the formation of the gap 320 in the electrode assembly 120 when the at least one of the electrodes 122 and 125 and the separator 120 are coupled. For example, the processor 208 may determine that the groove 310 having a specified size and/or a specified depth formed in the at least one of the electrodes 122 and 125 may cause the formation of the gap 320.

According to one embodiment, as illustrated in FIG. 4A, the processor 208 may determine a depth of the groove 310 based on a difference 420 between a maximum value 422 corresponding to a largest thickness of a measurement target (e.g., a maximum thickness of the plateau area) and a minimum value 424 corresponding to a smallest thickness of the measurement target (e.g., a minimum thickness of the dip area) among measured values 410 acquired through the measurement module 202. In addition, the processor 208 may determine a size of the groove 310 based on a range in which the measured values corresponding to a thickness smaller than or equal to a certain level are consecutively acquired. However, this is only exemplary, and various embodiments are not limited thereto. For example, various known techniques may be applied to determine the size and/or depth of the groove 310 formed in the at least one of the electrodes 122 and 125.

The at least one of the electrodes 122 and 125 may be defined as having a body portion and an upper end portion. The upper end portion may be defined as an area in a certain range toward the other end based on an edge of the electrode 122 or 125 (e.g., an edge of the electrode tab 124 or 127). In addition, the body portion may be defined as the remaining area excluding the upper end portion of the electrode 122 or 125. In general, the groove 310 that causes the formation of the gap 320 in the electrode assembly 120 is relatively more likely to be formed in the upper end portion than in the body portion of the electrode 122 or 125.

In this regard, the processor 208 according to various embodiments may restrict a determination area in which whether the groove 310 is formed is determined to the upper end portion of the electrode 122 or 125.

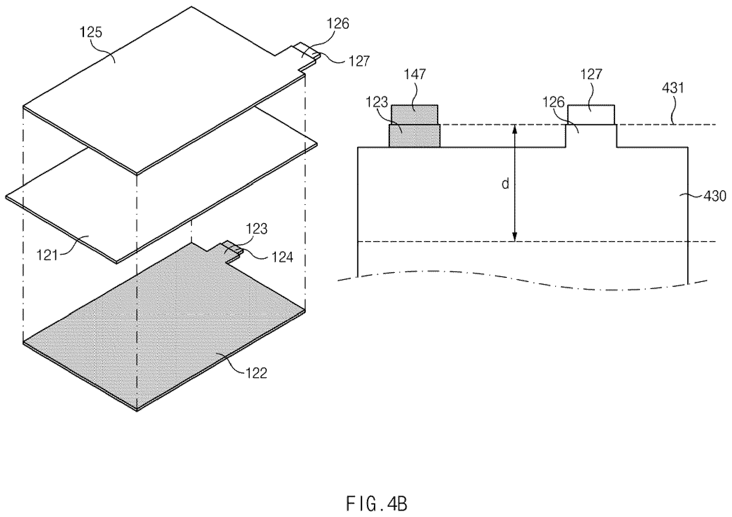

According to one embodiment, as illustrated in FIG. 4B, the electrode assembly 120 may be configured in a form in which the anode 122 and the cathode 125 having substantially the same size are laminated with the separator 121 interposed therebetween. In this case, the processor 208 may restrict an upper end portion 430 in a certain range d toward the other end based on an edge 431 of the electrode tab 123 or 126 to the determination area. In other words, the processor 208 may omit an operation of determining whether the groove 310 is formed in the body portion of the electrode 122 or 125 excluding the determination area. However, this is only exemplary, and various embodiments are not limited thereto. For example, the operation of determining whether the groove 310 is formed may be performed on only the body portion of the electrode 122 or 125 or may be performed on all of the upper end portion and the body portion.

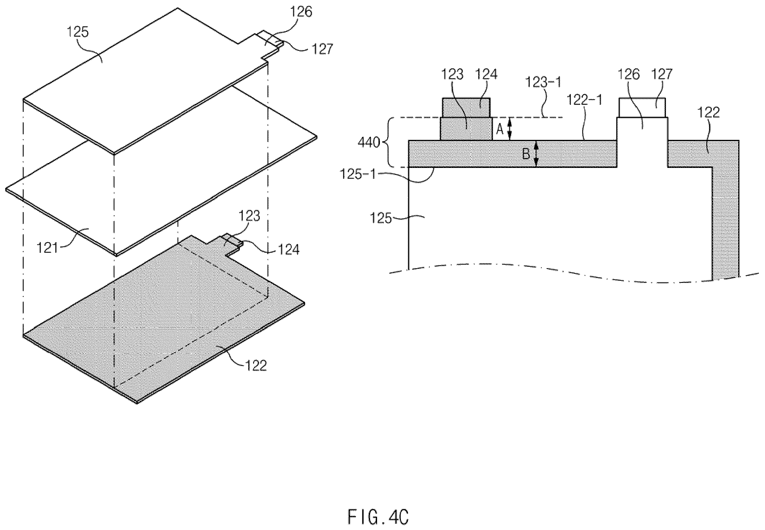

According to another embodiment, as illustrated in FIG. 4C, the electrode assembly 120 may be configured in a form in which the anode 122 and the cathode 125 having different sizes are laminated with the separator 121 interposed therebetween. In this case, the processor 208 may restrict an upper end portion 440 in which the two electrodes 122 and 125 do not face each other to the determination area. In other words, the processor 208 may determine whether the groove 310 is formed in only a determination area (A+B) including an area A between an edge 122-1 of the first electrode (e.g., the anode 122) having a relatively larger size and an edge 123-1 of the electrode tab 123 and an area B between the edge 122-1 of the first electrode and an edge 125-1 of the second electrode 125 having a relatively smaller size.

According to various embodiments, an inclined portion may be formed on the upper end portion of the electrode 122 or 125. For example, in a cutting process, the inclined portion of which a thickness gradually decreases toward the edge of the electrode 122 or 125 without cutting the edge of the electrode 122 or 125 (e.g., the edge 122-1 of the first electrode 122) substantially at a right angle may be formed. As another example, in a coating process, an inclined portion in which a thickness of a slurry decreases toward the edge of the electrode 122 or 125 may be formed.

Therefore, the processor 208 may define a range in which the maximum value corresponding to the largest thickness of the measurement target is acquired and a range in which the minimum value corresponding to the smallest thickness of the measurement target is acquired based on the inclined portion.

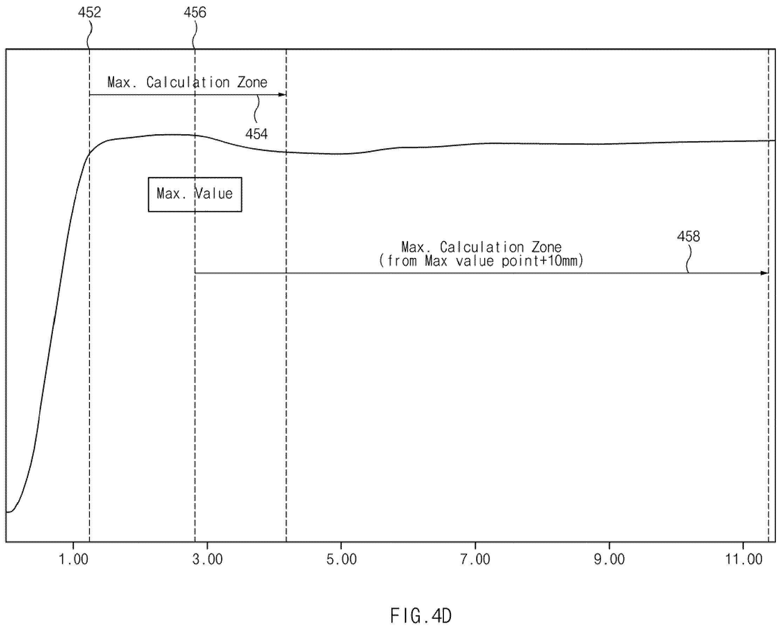

According to one embodiment, as illustrated in FIG. 4D, the processor 208 may define a boundary 452 (e.g., the edge 125-1 of the second electrode 125 illustrated in FIG. 4C) between the body portion and the upper end portion of the electrode 122 or 125 as a determination start point and define a certain range from the determination start point as a maximum value calculation range 454 (e.g., a plateau area detection range). For example, the maximum value calculation range 454 may be a range of 2 mm to 5 mm from the determination start point. Preferably, a range within 3 mm from the determination start point may be the maximum value calculation range.

According to one embodiment, the processor 208 may define a certain range from a maximum value calculation point 456 as a minimum value calculation range 458 (e.g., a dip area detection range). For example, the minimum value calculation range 458 may be a range from 8 mm to 15 mm from the maximum value calculation point 456. Preferably, a range within 10 mm from the maximum value calculation point 456 may be the minimum value calculation range.

According to various embodiments, as described above, the processor 208 may detect the bad electrode based on the groove 310 formed in the electrode 122 or 125.

Additionally or selectively, the processor 208 may further consider a position of the groove 310 when detecting the bad electrode. For example, as the position at which the groove 310 is formed is closer to the boundary 452 (e.g., the edge 125-1 of the second electrode 125 illustrated in FIG. 4C) between the body portion and the upper end portion of the electrode 122 or 125, the gap 320 having a relatively smaller size may be formed. In this regard, as illustrated in FIG. 5, the processor 208 may determine the corresponding electrode in which the groove 310, which may cause the formation of the gap 320 in the electrode assembly 120, is formed to be a normal electrode when a distance 514 between a boundary 510 (e.g., the edge 125-1 of the second electrode 125 illustrated in FIG. 4C) between the body portion and the upper end portion of the electrode 122 or 125 and a position 512 at which the groove is formed corresponds to a specified range.

According to one embodiment, the processor 208 may check the distance 514 between the edge of the plateau area, that is, the portion 512 at which the dip area starts and the boundary 510 between the body portion and the upper end portion. For example, the portion 512 at which the dip area starts may be defined in a range of 5% of a depth of the dip area. For example, the distance 514 between the portion 512 at which the dip area starts and the boundary 510 between the body portion and the upper end portion, which is illustrated in FIG. 5, may be defined as a width of the plateau area. In other words, an electrode in which a plateau area having a width in a specified range and a dip area are consecutively formed may be determined to be a normal electrode. On the other hand, an electrode in which a plateau area having a width exceeding the specified range and a dip area are consecutively formed may be determined to be a bad electrode.

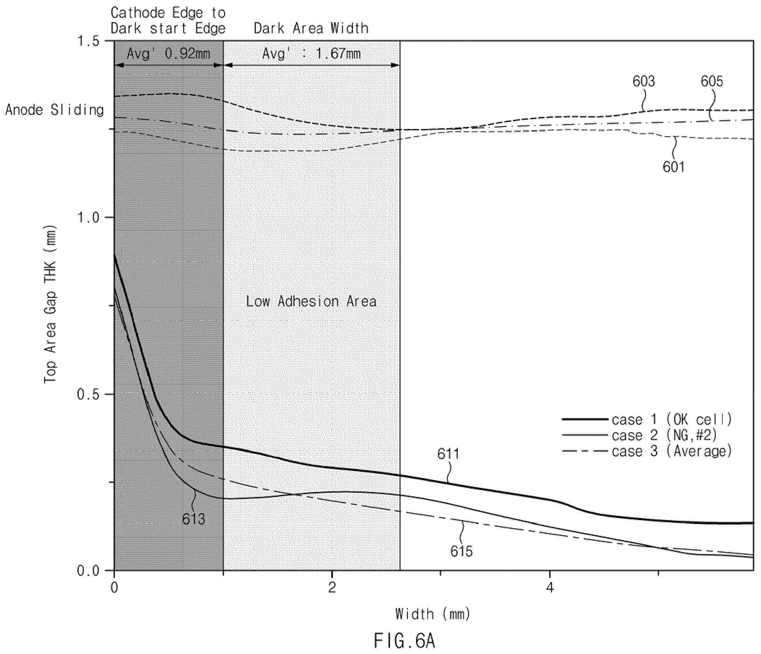

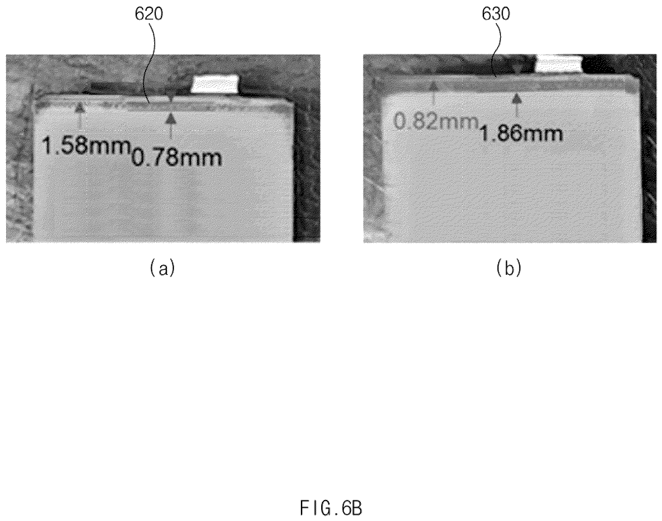

FIGS. 6A and 6B are views for describing the performance of the detection device according to various embodiments.

Referring to FIGS. 6A and 6B, it can be seen that the gap 320 may be formed in the electrode assembly 120 by at least one of the electrodes 122 and 125.

Specifically, FIG. 6A is a view illustrating the relationship between shapes of target electrodes and a gap.

For example, a third target electrode (case 3) 605 is a reference electrode that becomes a reference for a quality requirement. It can be seen that a shape of a first target electrode (case 1) 601 has a shape in which a thickness gradually decreases with a decreasing width similar to that of the third target electrode 605. Similar to a thickness change 615 of the third target electrode 605, this means that a thickness 611 of the first target electrode 601 without an inflection point in which a direction of the thickness change is changed may be detected as a thickness of a normal electrode that does not cause the formation of the gap.

On the other hand, it can be seen that a shape of a second target electrode (case 2) 603 has a shape in which a thickness decreases with a decreasing width different from that of the third target electrode 605. Differently from the thickness change 615 of the third target electrode 605, this means that the thickness 613 of the second target electrode 603 with the inflection point in which the direction of the thickness change is changed may be detected as a thickness of a bad electrode that causes the formation of the gap.

FIG. 6B is a view illustrating the electrode assembly 120 formed of target electrodes and illustrates that the detection result of FIG. 6A is very accurate.

Specifically, it can be seen that (a) of FIG. 6B illustrates the electrode assembly 120 manufactured by using the first target electrode 601 detected as the normal electrode, and a gap 620 having a relatively smaller size is formed between the first target electrode 601 and the separator 121.

In comparison, it can be seen that (b) of FIG. 6B illustrates the electrode assembly 120 manufactured by using the second target electrode 603 detected as the bad electrode, and a gap 630 having a relatively larger size is formed between the second target electrode 603 and the separator 121.

As described above, the detection device 200 according to various embodiments may accurately detect the bad electrode that may cause the formation of the gap in the electrode assembly 120 based on the thickness change of the electrode 122 or 125.

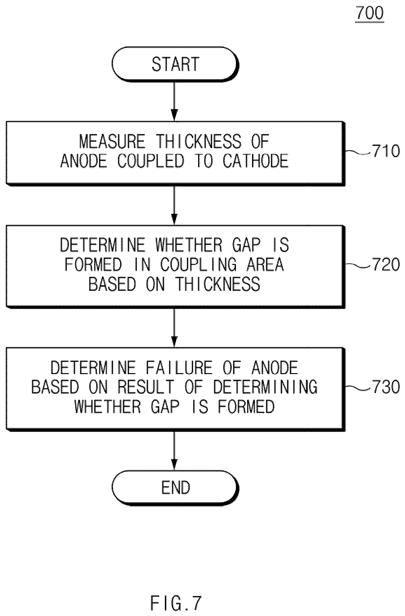

Hereinafter, a method of operating the detection device according to various embodiments will be described in detail with reference to FIGS. 7 to 9B.

FIG. 7 is a flowchart for describing a detection operation of the detection device according to various embodiments. Each operation in the following embodiment may be performed sequentially, but is not necessarily performed sequentially. For example, the order of each operation may be changed, and at least two operations may be performed in parallel. In addition, at least one of the following operations may be omitted according to embodiments.

Referring to FIG. 7, the detection device 200 (e.g., the processor 208) may measure the thickness of the anode 122 coupled to the cathode 125 in operation 710. According to one embodiment, as illustrated in FIG. 4C, the detection device 200 may measure the thickness of the anode 122 in a state in which the anode 122 having a relatively larger size and the cathode 125 having a relatively smaller size are laminated with the separator 121 interposed therebetween.

According to various embodiments, in operation 720, the detection device 200 (e.g., the processor 208) may determine whether the gap 320 is formed in the coupling area based on the measured thickness. According to one embodiment, the detection device 200 may determine whether the anode 122 has a shape that causes the formation of the gap 320. For example, the detection device 200 may check whether the groove 310 having the specified depth and/or size has been formed based on the thickness change of the anode 122. For example, the detection device 200 may determine whether the wave-shaped groove in which the area 402 (e.g., the plateau area) increased to the certain level or more compared to the reference thickness 401 and the area 404 (e.g., the dip area) decreased to the certain level or less compared to the reference thickness 401 are consecutively formed based on the reference thickness 401 (e.g., the average thickness) of the surfaces of the electrodes 122 and 125 has been formed.

According to various embodiments, in operation 730, the detection device 200 (e.g., the processor 208) may determine a failure of the anode 122 based on a result of determining whether the gap 320 is formed. According to one embodiment, the detection device 200 may determine the anode 122 in which the groove 310 having the specified depth and/or size has been formed to be the bad anode.

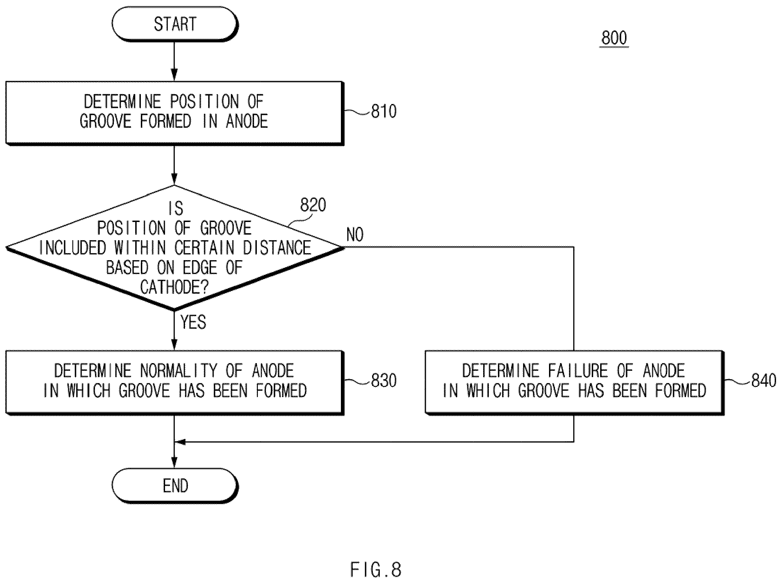

FIG. 8 is a flowchart for describing another operation of the detection device according to various embodiments Operations of FIG. 8 to be described below may be those representing various embodiments of operation 730 in FIG. 7.

Referring to FIG. 8, in operation 810, the detection device 200 (e.g., the processor 208) according to various embodiments may determine the position of the groove 310 formed in the anode 122.

According to various embodiments, in operation 820, the detection device 200 (e.g., the processor 208) may determine whether the position of the groove 310 is within a certain distance based on the edge of the cathode 125.

According to various embodiments, in operation 830, when the position of the groove 310 is included within the certain distance based on the edge of the cathode 125, the detection device 200 (e.g., the processor 208) may determine the anode 122 in which the groove 310 has been formed to be a normal anode.

According to various embodiments, in operation 840, when the position of the groove 310 is not included within the certain distance based on the edge of the cathode 125, the detection device 200 (e.g., the processor 208) may determine the anode 122 in which the groove 310 has been formed to be a bad anode.

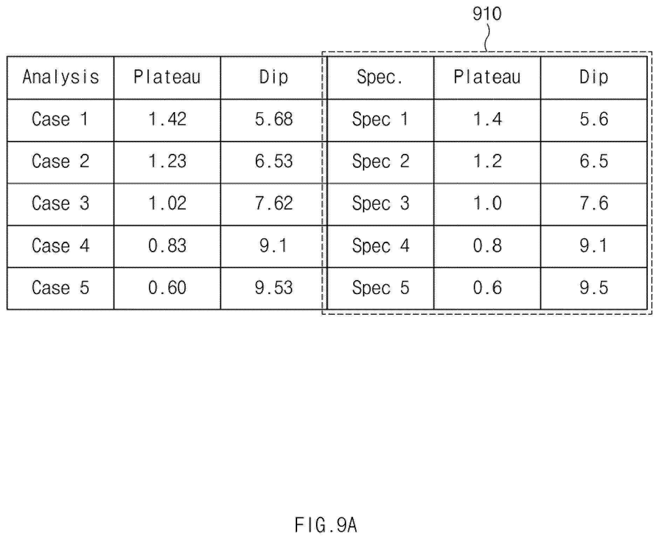

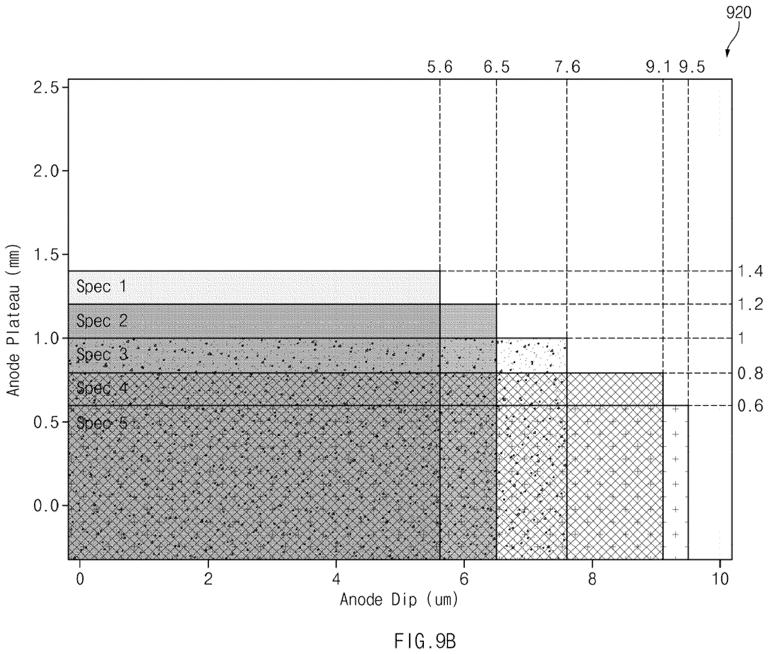

FIGS. 9A and 9B are views for describing an operation of setting a quality requirement criterion for an electrode in the detection device according to various embodiments.

Referring to FIGS. 9A and 9B, the detection device 200 according to various embodiments may set a quality requirement criterion based on a result of determining a quality (or an analysis result) of the electrode 122 or 125.

According to various embodiments, the detection device 200 may store the result of determining the quality of the electrode 122 or 125 in the form of a table. For example, the detection device 200 may store the shape of the groove 310 formed in the electrode 122 or 125 determined to be normal. The shape of the groove 310 may include at least one of the formation position of the groove 310, the area of the groove 310, and the depth of the groove 310. For example, when the wave-shaped groove 310 is formed in the electrode 122 or 125, the detection device 200 may store a shape of the plateau area and a shape of the dip area.

According to various embodiments, the detection device 200 may set an approximate value 910 of the stored shape of the groove to a criterion for determining normality. For example, as illustrated in FIG. 9B, a range of the groove 310 that may be determined to be normal may be specified 920 based on the shape of the groove 310 checked on the normal electrode. This criterion may be updated each time the quality requirement determination operation is performed. Therefore, the detection device 200 may determine an electrode in which the groove 310 included in a specified range has been formed to be the normal electrode and determine an electrode in which the groove 310 not included in the specified range has been formed to be the bad electrode.

As described above, the detection device 200 according to various embodiments may set the criterion for determining normality based on the result of determining the normality of the electrode 122 or 125. However, this is only exemplary, and various embodiments are not limited thereto. For example, the detection device 200 according to various embodiments may store the shape of the groove 310 formed in the electrode 122 or 125 determined to be bad and set an approximate value of the stored shape of the groove 310 to a criterion for determining a failure.

The above description is merely the exemplary description of the present invention, and those skilled in the art to which the present invention pertains will be able to variously modify and change the present invention without departing from the essential characteristics of the present invention.

Therefore, the embodiments disclosed in the present invention are not intended to limit the present invention but for describing it, and the scope of the present invention is not limited by these embodiments. The scope of the present invention should be construed by the appended claims, and the equivalent range should be construed as being included in the scope of the present invention.

## Claims

1. A detection device (200) configured to detect a bad electrode (122, 125), comprising:
a measurement module (202) configured to acquire a thickness measurement value of at least one electrode (122, 125); and
a processor (208) electrically connected to the measurement module (202), wherein the processor (208) is configured to: check a groove (310) formed in the at least one electrode (122, 125) based on the thickness measurement value; and detect the at least one electrode (122, 125) as a bad electrode (122, 125) when a wave-shaped groove (310) corresponding to a reference shape is checked, wherein the reference shape includes at least one of a specified area and a specified depth;
wherein the processor (208) is configured to check the wave-shaped groove (310) in a form in which a plateau area (402) increased to a certain level or more compared to a reference thickness (401) and a dip area (404) decreased to a certain level or less compared to the reference thickness (401) are consecutively formed based on the reference thickness (401) for the at least one electrode (122, 125);
wherein the processor (208) is configured to check the groove (310), which is formed in the at least one electrode (122, 125), in an inclined portion of which a thickness gradually decreases.

2. The detection device (200) according to claim 1, wherein the processor (208) is configured to check the groove (310) in an upper end portion (430, 440) of the electrode (122, 125) in a certain range toward the other end based on an edge (431, 123-1) of an electrode tab (123, 126) formed on the at least one electrode (122, 125).

3. The detection device (200) according to claim 1, wherein the processor (208) is configured to acquire a thickness measurement value of an electrode assembly (120) in which a cathode (125) and an anode (122) having substantially the same size are laminated with a separator (121) interposed therebetween.

4. The detection device (200) according to claim 1, wherein the processor (208) is configured to acquire a thickness measurement value of an electrode assembly (120) in which an anode (122) having a relatively larger size and a cathode (125) having a relatively smaller size are laminated with a separator (121) interposed therebetween.

5. The detection device (200) according to claim 4, wherein the processor (208) is configured to:
check a distance (514) between a position (512) at which the dip area (404) starts after the plateau area (402) and an edge (510, 125-1) of the cathode (125) when the wave-shaped groove (310) corresponding to the reference shape is checked;
detect the at least one electrode (122, 125) as a normal electrode when the distance (514) is included in a specified range; and
detect the at least one electrode (122, 125) as a bad electrode (122, 125) when the distance (514) is out of the specified range.

6. The detection device (200) according to claim 1, further comprising a memory (204), wherein the processor (208) is configured to:
re-set the reference shape based on the shape of the wave-shaped groove (310) formed in the bad electrode (122, 125); and
store the re-set reference shape in the memory (204).

7. A method (700) of operating a detection device (200), comprising:
an operation (710) of acquiring a thickness measurement value of at least one electrode (122, 125);
an operation (720) of checking a groove (310) formed in the at least one electrode (122, 125) based on the thickness measurement value;
an operation (730, 800) of detecting the at least one electrode (122, 125) as a bad electrode (122, 125) when a wave-shaped groove (310) corresponding to a reference shape is checked, wherein the reference shape includes at least one of a specified area and a specified depth, wherein the wave-shaped groove (310) includes a form in which a plateau area (402) increased to a certain level or more compared to a reference thickness (401) and a dip area (404) decreased to a certain level or less compared to the reference thickness (401) are consecutively formed based on the reference thickness (401) for the at least one electrode (122, 125); and
an operation of checking the groove (310), which is formed in the at least one electrode (122, 125), in an inclined portion of which a thickness (611, 613) gradually decreases.

## Patentansprüche

1. Detektionsvorrichtung (200) eingerichtet zum Detektieren einer schlechten Elektrode (122, 125), aufweisend:
ein Messmodul (202) eingerichtet zum Erfassen eines Dickenmesswerts mindestens einer Elektrode (122, 125); und
einen Prozessor (208), der elektrisch mit dem Messmodul (202) verbunden ist, wobei der Prozessor (208) eingerichtet ist zum: Überprüfen einer in der mindestens einen Elektrode (122, 125) ausgebildeten Nut (310) basierend auf dem Dickenmesswert; und Detektieren der mindestens einen Elektrode (122, 125) als eine schlechte Elektrode (122, 125), wenn eine wellenförmige Nut (310), die einer Referenzform entspricht, überprüft wird, wobei die Referenzform mindestens eines von einem spezifizierten Bereich und einer spezifizierten Tiefe aufweist;
wobei der Prozessor (208) eingerichtet ist zum Überprüfen der wellenförmigen Nut (310) in einer Form, in der ein Plateaubereich (402), der im Vergleich zu einer Referenzdicke (401) auf ein bestimmtes Niveau oder mehr erhöht ist, und ein Eintauchbereich (404), der im Vergleich zu der Referenzdicke (401) auf ein bestimmtes Niveau oder weniger verringert ist, aufeinanderfolgend basierend auf der Referenzdicke (401) für die mindestens eine Elektrode (122, 125) ausgebildet sind;
wobei der Prozessor (208) eingerichtet ist zum Überprüfen der Nut (310), die in der mindestens einen Elektrode (122, 125) ausgebildet ist, in einem geneigten Abschnitt, dessen Dicke allmählich abnimmt.

2. Detektionsvorrichtung (200) nach Anspruch 1, wobei der Prozessor (208) eingerichtet ist zum Überprüfen der Nut (310) in einem oberen Endabschnitt (430, 440) der Elektrode (122, 125) in einem bestimmten Bereich in Richtung des anderen Endes basierend auf einem Rand (431, 123-1) einer Elektrodenlasche (123, 126), die an der mindestens einen Elektrode (122, 125) ausgebildet ist.

3. Detektionsvorrichtung (200) nach Anspruch 1, wobei der Prozessor (208) eingerichtet ist zum Erfassen eines Dickenmesswerts einer Elektrodenanordnung (120), in der eine Kathode (125) und eine Anode (122), die im Wesentlichen gleich groß sind, mit einem dazwischen angeordneten Separator (121) laminiert sind.

4. Detektionsvorrichtung (200) nach Anspruch 1, wobei der Prozessor (208) eingerichtet ist zum Erfassen eines Dickenmesswerts einer Elektrodenanordnung (120), in der eine Anode (122), die eine relativ größere Größe hat, und eine Kathode (125), die eine relativ kleinere Größe hat, mit einem dazwischen angeordneten Separator (121) laminiert sind.

5. Detektionsvorrichtung (200) nach Anspruch 4, wobei der Prozessor (208) eingerichtet ist zum:
Überprüfen eines Abstands (514) zwischen einer Position (512), an der der Eintauchbereich (404) nach dem Plateaubereich (402) beginnt, und einem Rand (510, 125-1) der Kathode (125), wenn die wellenförmige Nut (310), die der Referenzform entspricht, überprüft wird;
Detektieren der mindestens einen Elektrode (122, 125) als eine normale Elektrode, wenn der Abstand (514) in einem spezifizierten Bereich liegt; und
Detektieren der mindestens einen Elektrode (122, 125) als eine schlechte Elektrode (122, 125), wenn der Abstand (514) außerhalb des spezifizierten Bereichs liegt.

6. Detektionsvorrichtung (200) nach Anspruch 1, ferner aufweisend einen Speicher (204), wobei der Prozessor (208) eingerichtet ist zum:
Zurücksetzen der Referenzform basierend auf der Form der wellenförmigen Nut (310), die in der schlechten Elektrode (122, 125) ausgebildet ist; und
Speichern der zurückgesetzten Referenzform in dem Speicher (204).

7. Verfahren (700) zum Betreiben einer Detektionsvorrichtung (200), umfassend:
einen Vorgang (710) zum Erfassen eines Dickenmesswerts mindestens einer Elektrode (122, 125);
einen Vorgang (720) zum Überprüfen einer in der mindestens einen Elektrode (122, 125) ausgebildeten Nut (310) basierend auf dem Dickenmesswert;
einen Vorgang (730, 800) zum Detektieren der mindestens einen Elektrode (122, 125) als eine schlechte Elektrode (122, 125), wenn eine wellenförmige Nut (310), die einer Referenzform entspricht, überprüft wird, wobei die Referenzform mindestens eines von einem spezifizierten Bereich und einer spezifizierten Tiefe aufweist, wobei die wellenförmige Nut (310) eine Form aufweist, in der ein Plateaubereich (402), der im Vergleich zu einer Referenzdicke (401) auf ein bestimmtes Niveau oder mehr erhöht ist, und ein Eintauchbereich (404), der im Vergleich zu der Referenzdicke (401) auf ein bestimmtes Niveau oder weniger verringert ist, aufeinanderfolgend basierend auf der Referenzdicke (401) für die mindestens eine Elektrode (122, 125) ausgebildet sind; und
einen Vorgang zum Überprüfen der Nut (310), die in der mindestens einen Elektrode (122, 125) ausgebildet ist, in einem geneigten Abschnitt, dessen Dicke (611, 613) allmählich abnimmt.

## Revendications

1. Dispositif de détection (200) configuré pour détecter une électrode (122, 125) défectueuse, comprenant :
un module de mesure (202) configuré pour acquérir une valeur de mesure de l'épaisseur d'au moins une électrode (122, 125) ; et
un processeur (208) connecté électriquement au module de mesure (202), le processeur (208) étant configuré pour : vérifier une cannelure (310) formée dans l'au moins une électrode (122, 125) d'après la valeur de mesure de l'épaisseur, et détecter l'au moins une électrode (122, 125) en tant qu'électrode défectueuse (122, 125) lors de la vérification d'une cannelure ondulée (310) correspondant à une forme de référence, la forme de référence comprenant au moins une d'une superficie spécifiée et d'une profondeur spécifiée ;
le processeur (208) étant configuré pour vérifier la cannelure (310) ondulée sous une forme dans laquelle une zone de palier (402) ayant augmenté jusqu'à un certain niveau, ou davantage, relativement à une épaisseur de référence (401) et une zone d'affaissement (404) ayant diminué jusqu'à un certain niveau, ou moins, relativement à une épaisseur de référence (401) sont formées successivement d'après une épaisseur de référence (401) pour l'au moins une électrode (122, 125) ;
le processeur (208) étant configuré pour vérifier la cannelure (310), qui est formée dans l'au moins une électrode (122, 125), dans une partie inclinée dont une épaisseur diminue progressivement.

2. Dispositif de détection (200) selon la revendication 1, le processeur (208) étant configuré pour vérifier la cannelure (310) dans une partie d'extrémité supérieure (430, 440) de l'électrode (122, 125) dans une certaine plage vers l'autre extrémité d'après un bord (431, 123-1) d'une languette d'électrode (123, 126) formée sur l'au moins une électrode (122, 125).

3. Dispositif de détection (200) selon la revendication 1, le processeur (208) étant configuré pour acquérir une valeur de mesure de l'épaisseur d'un ensemble d'électrode (120) dans lequel une cathode (125) et une anode (122), dont la taille est substantiellement la même, sont stratifiées avec un séparateur (121) intercalé entre elles.

4. Dispositif de détection (200) selon la revendication 1, le processeur (208) étant configuré pour acquérir une valeur de mesure de l'épaisseur d'un ensemble d'électrodes (120) dans lequel une anode (122) aux dimensions relativement supérieures, et une cathode (125), aux dimensions relativement inférieures, sont stratifiées avec un séparateur (121) intercalé entre elles.

5. Dispositif de détection (200) selon la revendication 4, le processeur (208) étant configuré pour :
vérifier une distance (514) entre une position (512) dans laquelle la zone d'affaissement (404) commence après la zone de palier (402), et un bord (510, 125-1) de la cathode (125) lorsque la cannelure ondulée (310) correspondant à la forme de référence est vérifiée ;
détecter l'au moins une électrode (122, 125) en tant qu'électrode normale lorsque la distance (514) est comprise dans une plage spécifiée ; et
détecter l'au moins une électrode (122, 125) en tant qu'électrode défectueuse (122, 125) lorsque la distance (514) est hors de la plage spécifiée

6. Dispositif de détection (200) selon la revendication 1, comprenant en outre une mémoire (204), le processeur (208) étant configuré pour :
réinitialiser la forme de référence d'après la forme de la cannelure ondulée (310) formée dans l'électrode défectueuse (122, 125) ; et
mettre en mémoire (204) la forme de référence réinitialisée.

7. Procédé (700) d'utilisation d'un dispositif de détection (200) comprenant :
une opération (710) d'acquisition d'une valeur de mesure de l'épaisseur d'au moins une électrode (122, 125) ;
une opération (720) de vérification d'une cannelure (310) formée dans l'au moins une électrode (122, 125) d'après la valeur de mesure de l'épaisseur ;
une opération (730, 800) de détection de l'au moins une électrode (122, 125) en tant qu'électrode défectueuse (122, 125) lorsqu'une cannelure ondulée (310) correspondant à une forme de référence est vérifiée, la forme de référence comprenant au moins une d'une superficie spécifiée et d'une profondeur spécifiée, la cannelure ondulée (310) comprenant une forme dans laquelle une zone de palier (402) augmentée jusqu'à un certain niveau, ou davantage, relativement à une épaisseur de référence (401), et une zone d'affaissement (404) diminuée jusqu'à un certain niveau, ou moins, relativement à une épaisseur de référence (401) sont formées successivement d'après une épaisseur de référence (401) pour l'au moins une électrode (122, 125) ; et
une opération de vérification de la cannelure (310), qui est formée dans l'au moins une électrode (122, 125), dans une partie inclinée dont une épaisseur (611, 613) diminue progressivement.
